# EUROPÄISCHE PATENTANMELDUNG

(11) **EP 1 329 427 A2**
(43) Veröffentlichungstag der Anmeldung: **23.07.2003**
(21) Anmeldenummer: 03001150.6
(22) Anmeldetag: 21.01.2003
(51) Int. Cl.: C02F 11/12, B01D 29/09

(54) **Vorrichtung und Verfahren zur Entwässerung von Schlämmen**

(30) Priorität: 22.01.2002 DE 10207451
(71) Anmelder: Kraus, Karl, D-79777 Ühlingen-Birkendorf (DE); Kraus, Oliver, 79777 Ühlingen-Birkendorf (DE)
(72) Erfinder: Kraus, Karl, D-79777 Ühlingen-Birkendorf (DE); Kraus, Oliver, 79777 Ühlingen-Birkendorf (DE)
(74) Vertreter: Ebert, Jutta

(57) **Zusammenfassung**

Die Erfindung bezieht sich auf eine Vorrichtung und ein Verfahren zur Entwässerung von Schlämmen und schlammhaltigen Gemischen, wie Klärschlämmen, Industrieschlämmen und weiteren schlammartigen Ausgangsprodukten, wobei der flüssige Anteil des zu entwässernden Schlammes durch ein Siebband (1) gepresst und der zurückbleibende Schlammpresskuchen (16) abtransportiert wird.

Es wird vorgeschlagen, dass bei einer solchen Vorrichtung über dem Siebband (1) ein heb- und senkbarer Kasten (4, 22) angeordnet ist, der in seinem abgesenkten Zustand mit einer Dichtung (5) auf dem Siebband (1) aufliegt und mit Schlamm befüllbar ist und dass in dem Kasten (4, 22) eine mit einer Gleitdichtung (11) gegen die Innenwand des Kastens (4, 22) abgedichtete Pressplatte (10, 21) durch mindestens eine Druckvorrichtung (9, 20) auf- und ab bewegbar und mit variablem Druck auf den im Kasten (4) befindlichen Schlamm pressbar ist (Fig. 1).

Diese Vorrichtung ist vergleichsweise einfach im Aufbau und in der Bedienung und erzielt bei geringerem Energieverbrauch eine bessere Entwässerung mit höherer Trockensubstanz des Presskuchens.

## Beschreibung

Die Erfindung bezieht sich auf eine Vorrichtung und ein Verfahren zur Entwässerung von Schlämmen und schlammhaltigen Gemischen, wie Klärschlämme, Industrieschlämme und weitere schlammartige Ausgangsprodukte, bei der der flüssige Anteil des zu entwässernden Schlammes durch ein Siebband gepresst wird und der zurückbleibende Schlammpresskuchen abtransportiert wird.

Für die Schlammentwässerung werden kontinuierlich arbeitende Bandfilterpressen eingesetzt. Sie besitzen Vorentwässerungsstrecken, Mitteldruckpresszonen und Hochdruckpresszonen, in denen das Pressgut unterschiedlich bearbeitet wird. Bisher wird damit jedoch nur ein unbefriedigend niedriger Feststoffgehalt bei der Entwässerung erreicht. Dabei sind die bekannten Bandfilterpressen sehr aufwendig konstruiert und besitzen viele bewegliche Teile, die einem starken Verschleiß unterliegen. Außerdem verbrauchen sie verhältnismäßig viel Energie und benötigen eine kontinuierliche Überwachung während des Betriebs.

Aus der DE 196 27 884 A1 ist eine Bandfilterpresse bekannt, die mit zwei Siebbändern arbeitet. Auf dem einen Siebband wird der zu entwässernde Schlamm herangebracht und dabei auf einer Steigungsstrecke schon vorentwässert. Das zweite Siebband wird danach von oben auf den Schlamm zur Auflage gebracht, so dass der Schlamm zwischen den beiden Siebbändern gefasst ist und so um mehrere Umlenk- und Presswalzen gelenkt und befördert werden kann, zwischen denen er mit steigendem Anpressdruck gepresst also entwässert wird. Diese Presse besteht aus einer Vielzahl von Einzelteilen, wie Walzen, Rollen, Lagern, zwei Siebbändern und anderes mehr, die aufeinander ausgerichtet und in ihrer Bewegung abgestimmt werden müssen; z.B. darf zwischen den beiden Siebbändern kein Schlupf entstehen, so dass ein besonderer Antrieb erforderlich ist, und die Presswalzen müssen exakt parallel in einem Lagergehäuse gelagert sein. Der mit Rollen oder Walzen ausübbare Druck ist oft nicht ausreichend hoch genug, um einen wirklich zufriedenstellenden Feststoffgehalt des entwässerten Schlammkuchens in der, wegen der kontinuierlich erfolgenden Pressung, relativ kurzen Presszeit zu erreichen. Auch lässt sich der Druck nicht beliebig erhöhen, weil das Sieb oder Siebband während des Betriebs dicht wird, und zwar mit zunehmendem Druck schneller. Dies macht umständliche Wartungsarbeiten notwendig, die den Betrieb aufhalten.

Nach der DE 37 15 826 A1 wird der Schlamm zwischen zwei endlosen von Tragbändern gehaltenen Filterbändern gefasst, über Rollen kontinuierlich durch Hochdruckstationen geführt, in denen mittels einer Anzahl von Hydraulikzylindern ein ebenfalls umlaufendes Panzerband mit ansteigendem Druck gegen die Schlammkammer gepresst wird. Auch hier muss für ein hohes Maß an Gleichlauf zwischen einer Vielzahl von Rollen und anderen Elementen gesorgt sein, die Hydraulikzylinder müssen gezielt betätigt werden, um den zunehmenden Pressdruck erzeugen zu können. Der Aufbau der Vorrichtung ist kompliziert und störanfällig.

Aufgabe der Erfindung ist es, eine Vorrichtung zur Entwässerung von Schlämmen und schlammartigen Gemischen zu schaffen, die mit konstruktiv vergleichsweise einfachen Mitteln und geringem Energieaufwand ein höherer Entwässerungsgrad erreicht wird als mit bisher zum Einsatz kommenden Vorrichtungen. Die neue Vorrichtung soll, ohne eine ständige Überwachung während des Betriebs zu erfordern, störungsfrei arbeiten und möglichst wartungsfrei sein.

Dies wird bei einer Vorrichtung der eingangs genannten Art erfindungsgemäß dadurch erreicht, dass über dem Siebband ein heb- und senkbarer Kasten angeordnet ist, der in seinem abgesenkten Zustand mit einer Dichtung auf dem Siebband aufliegt und mit dem zu entwässernden Schlamm befüllbar ist; in dem Kasten ist eine mit einer Gleitdichtung gegen die Innenwand des Kastens abgedichtete Pressplatte durch mindestens eine Druckvorrichtung auf- und ab bewegbar und kann mit variablem Druck auf den im Kasten befindlichen Schlamm gepresst werden.

Bei einer solchen Vorrichtung findet unmittelbar nach der Befüllung des Kastens in einer ersten Phase schon eine Vorentwässerung allein durch die Schwerkraft statt, mit der bereits eine Volumenreduzierung von über 50% erreicht werden kann. Ohne eine weitere Zwischenstufe oder Zwischenstation durchlaufen zu müssen, kann danach die eigentliche Druckentwässerung erfolgen, indem die Pressplatte mit Druck auf den Schlamm gepresst wird. Im Gegensatz zu bekannten Vorrichtungen, bei denen der Schlamm kontinuierlich durch meist mehrere Entwässerungsstationen geleitet und dabei ausgepresst wird, lässt sich hier der Druck langsam und über einen angemessenen Zeitraum steigern und so in einer einzigen Entwässerungsstation eine effektivere Entwässerung des Schlammes mit bis zu 40% Trockensubstanz TS erreichen.

Die Vorentwässerungsstation und die Druckentwässerungsstation sind dieselbe, was die Vorrichtung im Vergleich zu bekannten Anlagen auch preiswerter und platzsparender macht.

Als Druckvorrichtung zur Beaufschlagung der Pressplatte ist vorzugsweise mindestens eine hydraulische Zylinder-Kolben-Einheit vorgesehen. Ein Feuchtigkeitsmessfühler kann vorteilhaft ein Signal an die Druckvorrichtung oder Zylinder-Kolben-Einheit abgeben, wenn nach erreichen eines bestimmten Grades der Vorentwässerung mit der Druckentwässerung begonnen werden soll; weiter kann abhängig vom Signal des Feuchtigkeitsmessfühlers bzw. eines Flüssigkeitsmessers in der Presswasserabteilung, vorzugsweise taktweise, der Druck bis auf seinen Höchstwert gesteigert werden. Durch diese langsame und feuchtigkeitsabhängige Erhöhung des Drucks wird eine zu hohe Fließgeschwindigkeit und eine vorzeitige Verstopfung des Siebbandes vermieden.

In dem Kasten sind vorteilhafterweise Anschläge vorgesehen, an denen die Pressplatte bei ihrer Hubbewegung anschlägt und den Kasten in ihrer weiteren Hubbewegung mitnimmt und vom Siebband abhebt. Für den Kasten und die Pressplatte ist so nur eine gemeinsame Antriebsvorrichtung erforderlich.

Das Siebband ist vorzugsweise in Form eines Endlosbandes um Rollen geführt, von denen mindestens eine als Antriebsrolle für die Bewegung des Siebbandes ausgeführt ist. Dabei kann an der einen Rolle ein vorzugsweise die gesamte Breite des Siebbandes abdeckender Abstreifer vorgesehen sein. Wenn nach Beendigung der Druckentwässerung der Kasten vom Siebband abgehoben wird, wird das Siebband angetrieben und der darauf verbliebene Schlammpresskuchen aus der Entwässerungsstation hinausbefördert und abgestreift. Das umlaufende Siebband kann danach bei Bedarf mit Wasser aus dafür vorgesehenen Düsen gereinigt werden, bis es für den nächsten Entwässerungsgang wieder angehalten wird.

Es ist von Vorteil, wenn das Siebband durch ein zwischen den Rollen angeordnetes Stützgerüst getragen und so immer eben und waagrecht gehalten wird. Dies kann durch ein Lochblech oder Spaltsieb zwischen dem Stützgerüst und dem Siebband noch unterstützt werden.

Nach einer bevorzugten Ausführungsform der Erfindung sind zur Beaufschlagung der Pressplatte zwei synchron arbeitende hydraulische Zylinder-Kolben-Einheiten vorgesehen, deren Gleichlauf durch eine Gleichlaufregelung kontrolliert wird.

Dazu können an der Pressplatte einander gegenüberliegend die Bewegung der Pressplatte übertragende Übertragungselemente vorgesehen sein, die mit den freien Enden eines Waagebalkens verbunden sind; an dem Waagebalken ist eine Betätigungsvorrichtung angeordnet ist, durch die beim Ausschlagen des Waagebalkens Schalter betätigt werden, über die der hydraulische Druck in den Zylinder-Kolben-Einheiten steuerbar ist. Solange der Waagebalken sich in seiner Balance befindet, ist der Gleichlauf der Druckvorrichtungen gewährleistet und die Pressplatte bleibt unverkantet in waagrechter Stellung, und auf den Presskuchen wird ein gleichmäßiger Druck ausgeübt.

Als Übertragungselemente kann an der Pressplatte sich diagonal gegenüberliegend je ein Seil oder eine Kette befestigt ist, von denen jede über Umlenkrollen geführt und mit dem jeweils anderen freien Ende des Waagebalkens verbunden ist; der Waagebalken kann in seinem Drehpunkt mit einem Wagen fest verbunden sein, der mittels Rollen in von einem feststehenden Gestell herabhängend angebrachten Führungsschienen gegenläufig zur Pressplatte auf- und ab bewegbar ist.

Vorzugsweise wird beim Auslenken des Waagebalkens durch die daran vorgesehene Betätigungsvorrichtung zunächst ein Schalter betätigt, über den der hydraulische Druck (bzw. der Zufluss des Druckmediums) in den Zylinder-Kolben-Einheiten steuerbar ist; bei einer weiteren Auslenkung des Waagebalkens wird dann ein Überwachungs- oder Notschalter betätigt, über den die Anlage abgeschaltet und/oder eine Anzeige der Störung erfolgt. Eine Abschaltung der Anlage erfolgt nur, wenn sich die Balance am Waagebalken über den hydraulischen Druck (bzw. Zufluss) in der Zylinder-Kolben-Einheit nicht wieder herstellen lässt; unnötiger Stillstand wird so vermieden.

Die Schalter können am Wagen beidseitig der am Waagebalken befestigten Betätigungsvorrichtung angeordnet sein.

Wenn der Kasten einen kreisrunden Querschnitt aufweist und die Pressplatte demzufolge auch kreisrund ist, verbessert sich die Statik und es kann vorzugsweise mit einer einzigen, zentralen Druckvorrichtung (Zylinder-Kolben-Einheit) zur Beaufschlagung der Pressplatte ein höherer Druck erreicht werden.

Nach einer besonders vorteilhaften Ausführungsform der Erfindung ist seitlich neben und über dem Siebband mindestens eine Schiene angeordnet ist, in der eine die gesamte Breite des Siebbandes abdeckende Zerkleinerungswalze verschiebbar ist.

Zusammen mit der Zerkleinerungswalze kann auch eine die gesamte Breite des Siebbandes abdeckende Abhebevorrichtung in der Schiene verschiebbar sein. Nach einem Entwässerungsgang kann damit bei angehobenen Kasten der auf dem Siebband liegende Presskuchen zerkleinert und abgehoben, also gelockert werden und danach ein erneuter Pressgang erfolgen. Dies kann beliebig wiederholt werden, bis keine Entwässerung mehr stattfindet.

Nach einer vorteilhaften Weiterbildung der Erfindung ist dem Kasten ein Mischbehälter mit Rührwerk zur Beimischung eines grob zerkleinerten, drainage-fördernden Zusatzstoffes zum zu entwässernden Schlamm vorgeschaltet. Durch die Beimischung eines solchen Zusatzstoffes bilden sich beim Pressvorgang im Presskuchen Hohlräume und Risse, die das Abfließen des Wassers fördern und beschleunigen, so dass der erreichbare Entwässerungsgrad nochmals gesteigert und eine Trockensubstanz TS von über 50% erreicht werden kann. Durch den dem Kasten vorgeschalteten Mischbehälter wird die Beimengung des Zusatzstoffes vereinfacht und verbessert.

Dazu wird der zu entwässernde Schlamm über eine Schlammleitung in den Mischbehälter eingebracht, und diese Schlammleitung ist außerdem über einen Abzweigstutzen mit einem Zusatzstoff-Behälter verbunden aus dem der Zusatzstoff vor der Einmischung des Flockungsmittels beigemischt wird.

Durch eine zwischen dem Abzweigstutzen und dem Zusatzstoff-Behälter angeordnete Fördervorrichtung, z.B. einen Schneckenförderer, kann der Zusatzstoff dosiert zugeführt werden.
Der Zusatzstoff besteht vorzugsweise aus einem Gemisch aus nach der Druckentwässerung des Schlamms aus dem verbliebenen Schlammpresskuchen anfallenden, kleineren Presskuchenteilen bzw. Granulat und einem Feuchtigkeit aufnehmenden Stoff von großer Oberfläche und leichtem Gewicht, wie Sägemehl oder gehäkseltem Stroh besteht. Der Anteil des Zusatzstoffes am Schlammpresskuchen sollte vorzugsweise nicht zu groß sein. Durch das Mengenverhältnis wird Gewicht gespart und gleichzeitig die Entwässerung so gefördert, dass mit weniger Druck als bei bekannten Vorrichtungen (etwa 1 -5 bar statt 15 bar) ein gleich gutes oder sogar besseres Ergebnis erzielt wird, also auch Energie eingespart wird. Das Granulat kann unmittelbar dem die Entwässerungsstation nach der Druckentwässerung verlassenden, nur grob zerkleinerten Presskuchen entnommen werden. Der mit der erfindungsgemäßen Vorrichtung erreichte Trockengrad des Presskuchens macht einen besonderen Trockengang überflüssig. Auch das Vermahlen des Presskuchens erübrigt sich und wäre sogar nachteilig, da die Drainagewirkung eines grob, z.B. in Würfelgröße, zerkleinerten Zusatzstoffes deutlich besser ist als die eines fein gemahlenen Zusatzstoffes. Meist zerfällt der Presskuchen beim Verlassen der Entwässerungsstation von selbst in Stücke geeigneter Größe.

Vorteilhaft sind am Umfang des Mischbehälters gleichmäßig verteilt mehrere Füllrohre angeordnet, durch die ein an sich bekanntes Flockungsmittel beigemischt werden kann, das die festen Stoffe des Gemisches von dem flüssigen Anteil trennt und damit die Entwässerung erleichtert oder begünstigt.

Um den zu entwässernden Schlamm intensiv mit den Zusatzstoffen und dem Flockungsmittel vermischen zu können, ist im Mischbehälter ein Rührwerk, vorzugsweise mit Bodenräumer vorgesehen.

Zur Effektivitätssteigerung können in einer Entwässerungsanlage über dem Siebband mehrere Entwässerungseinheiten, jeweils bestehend aus dem heb- und senkbaren Kasten und der durch eine Druckvorrichtung darin aufund ab bewegbaren Pressplatte hintereinander angeordnet sein.

Die Erfindung wird im folgenden anhand der anhängenden Zeichnungen beispielhaft näher beschrieben; es zeigen
- Fig. 1: eine erste Ausführungsform der erfindungsgemäßen Vorrichtung in Seitenansicht, teilweise geschnitten,
- Fig. 2: eine Draufsicht auf die Vorrichtung nach Fig. 1,
- Fig. 3: eine zweite Ausführungsform der erfindungsgemäßen Vorrichtung,
- Fig. 4: die Draufsicht auf eine dritte Ausführungsform,
- Fig. 5: die Seitenansicht einer vierten Ausführungsform der Erfindung,
- Fig. 6: die Seitenansicht einer bei der Erfindung einsetzbaren Gleichlaufregelung und
- Fig. 7: schematisch eine Vorrichtung für das erfindungsgemäße Einbringen von Zusatzstoffen.

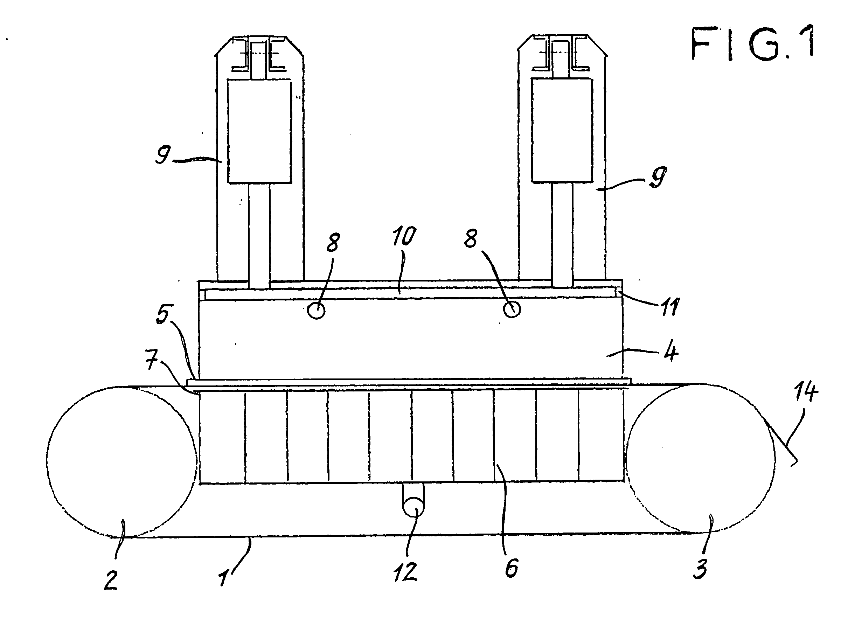

Fig.1 zeigt, teilweise geschnitten, die Seitenansicht einer ersten Ausführungsform der erfindungsgemäßen Vorrichtung zur Entwässerung von Schlämmen. Ein endloses Siebband 1 ist über zwei Walzen 2 und 3 gelegt und kann von mindestens einer oder auch von beiden Walzen 2, 3 angetrieben werden. Über dem Siebband 1 ist ein heb- und senkbarer Kasten 4 angeordnet, der in abgesenktem Zustand mit einer Dichtung 5 auf dem Siebband 1 aufliegt und über Öffnungen 8 mit dem zu entwässernden Schlamm befüllt werden kann. Das Siebband 1 wird durch ein Stützgerüst 6 und ein Lochblech oder Spaltsieb 7 in einer nahezu ebenen Lage gehalten. Im Kasten 4 ist eine mittels Druckvorrichtungen, vorzugsweise hydraulischen Zylinder-Kolben-Einheiten 9, heb- und senkbare Pressplatte 10 angeordnet, die bei dieser Bewegung an der Innenwand des Kastens 4 durch eine Gleitdichtung 11 abgedichtet entlang gleitet.

Der Kasten 4 wird in seinem auf das Siebband 1 abgesenkten Zustand und bei angehobener Pressplatte 10 durch die Öffnungen 8 mit Schlamm befüllt, und es erfolgt zunächst eine Vorentwässerung des Schlammes allein durch die Schwerkraft; das Filtratwasser wird über eine Leitung 12 abgeleitet. Dabei kann bereits eine Volumenreduzierung des zu entwässernden Schlamms um über 50% erreicht werden.

Nach Beendigung dieser ersten Entwässerungsphase wird die Pressplatte 10 durch die Zylinder-Kolben-Einheiten 9, oder eine andere geeignete Druckeinrichtung, z.B. eine Spindel, im Kasten 4 nach unten gedrückt. Schon bevor die Pressplatte 10 in direkten Kontakt mit dem Schlamm kommt, beginnt die Druc??kentwässerungsphase, indem das im Kasten 4 vorhandene Luftpolster Wasser aus dem Schlamm drückt. Die Druckentwässerungsphase setzt sich fort, wenn die Pressplatte 10 den Schlamm erreicht und diesen mit langsam, aber vorzugsweise taktweise, bis auf einen Höchstwert steigenden Druck entwässert. Der Beginn der Druckentwässerung und die Drucksteigerung können abhängig von einem Feuchtigkeitsmessfühler (in der Zeichnung nicht dargestellt) gesteuert werden. Der Pressvorgang der Druckentwässerung kann solange andauern, bis die Durchsatzleistung einerseits bzw. bei genügend vorhandener Reserve die maximal mögliche Trockensubstanz, welche über 40% TS erreichen kann, andererseits erreicht ist. Durch die langsame, taktweise Drucksteigerung wird eine zu hohe Fließgeschwindigkeit des Filtratwassers und damit auch die vorzeitige Verstopfung des Siebbandes 1 vermieden. Da für den Druckaufbau auch immer nur kurz nachgetaktet werden muss, ist auch der Energieverbrauch äußerst gering.

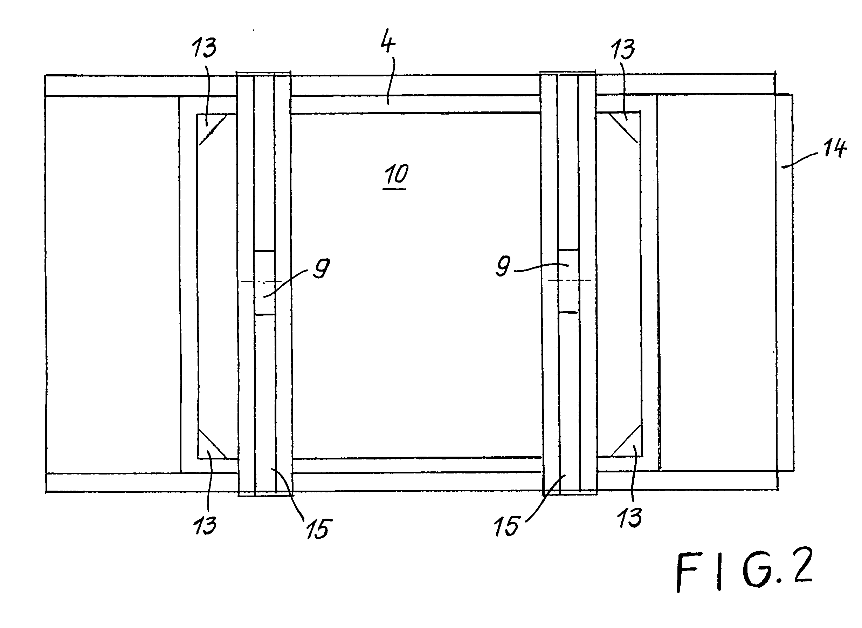

Nach Beendigung der Druckentwässerung fährt die Pressplatte 10 im Kasten 4 zurück, bis sie darin an Anschlägen 13 (siehe Fig. 2) anstößt und in ihrer weiteren Bewegung den Kasten 4 nach oben mitnimmt, so dass dieser vom Siebband 1 abgehoben wird. Wenn der Kasten 4 seine oberste Stellung erreicht hat, wird das Siebband 1 durch eine der Walzen 2, 3 angetrieben und der auf dem Siebband 1 befindliche Presskuchen 16 in Richtung auf einen neben der einen Walze 3 angeordneten Abstreifer 14 bewegt und so vom Siebband 1 abgestreift.

Fig. 2 zeigt die Draufsicht auf die Vorrichtung nach Fig. 1. Zu erkennen ist der heb- und senkbare Kasten 4 über dem Siebband 1 und in den vier Ecken des rechteckigen Kastens 4 die Anschläge 13, an denen die Pressplatte 10 bei ihrer durch die an zwei Trägern 15 verankerten Zylinder-Kolben-Einheiten 9 bewirkten Hubbewegung den Kasten 4 für die Entleerung mitnimmt. Seitlich am Siebband 1 ist der Abstreifer 14 angedeutet.

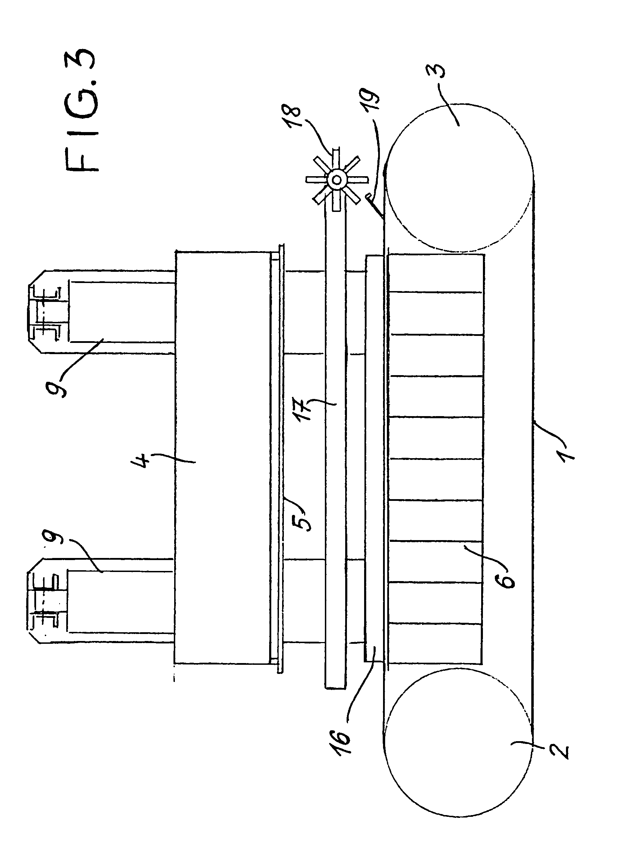

Fig. 3 zeigt teilweise geschnitten die Seitenansicht einer zweiten Ausführungsform der Erfindung, die besonders vorteilhaft dann zur Anwendung kommen kann, wenn ein hoher Festgehalt des Presskuchens 16 erwartet wird. Sie unterscheidet sich von der nach Fig. 1 im wesentlichen dadurch, dass seitlich an der Vorrichtung und im Abstand über dem Siebband 1 eine Schiene 17 vorgesehen ist, in der eine über die gesamte Breite des Siebbandes 1 reichende Zerkleinerungswalze 18 mit sternförmigem Querschnitt drehbar und verschiebbar gelagert ist. Vorteilhaft befindet sich beidseitig der Vorrichtung je eine Schiene 17, und die Zerkleinerungswalze 18 ist zwischen diesen beiden Schienen 17 gehalten. Außerdem ist eine ebenfalls die gesamte Breite des Siebbandes 1 abdeckende Abhebevorrichtung 19 vorgesehen, die gemeinsam mit der Zerkleinerungswalze 18 verschoben werden kann. Diese Zerkleinerungswalze 18 und Abhebevorrichtung 19 dienen der Auflockerung und Zerkleinerung des Presskuchens 16 bei besonders hohem Festgehalt nach einer Druckentwässerung. Nach Beendigung der Druckentwässerung wird die Pressplatte 10 nach oben gefahren und hebt dabei den Kasten 4 vom Siebband 1 bis über die Zerkleinerungswalze 18 ab. Hat der Kasten 4 seine oberste Stellung erreicht, wird die Zerkleinerungswalze 18 in Drehung versetzt und zusammen mit der Abhebeeinrichtung 19 in der oder den Schienen 17 gegen den Schlammpresskuchen 16 gefahren. Dabei wird der Presskuchen 16 vom Siebband 1 abgehoben und durch die Zerkleinerungswalze 18 zerkleinert; die Stücke fallen anschließend wieder auf das Siebband 1 zurück. Dabei halten nicht dargestellte Leitbleche den zerkleinerten Presskuchen 16 innerhalb des Abdeckbereiches der Pressplatte 10. Nach dem Ablöse- und Zerkleinerungsvorgang wird die Zerkleinerungswalze 18 zusammen mit der Abhebeeinrichtung 19 in der Schiene 17 in ihre Ausgangsstellung zurückgefahren. Der Kasten 4 wird wieder abgesenkt und die Pressplatte 10 fährt erneut gegen den zerstückelten Schlammpresskuchen und entwässert diesen weiter. Dieser Vorgang kann einige Male wiederholt werden, bis keine wesentliche Schlammentwässerung mehr erfolgt.

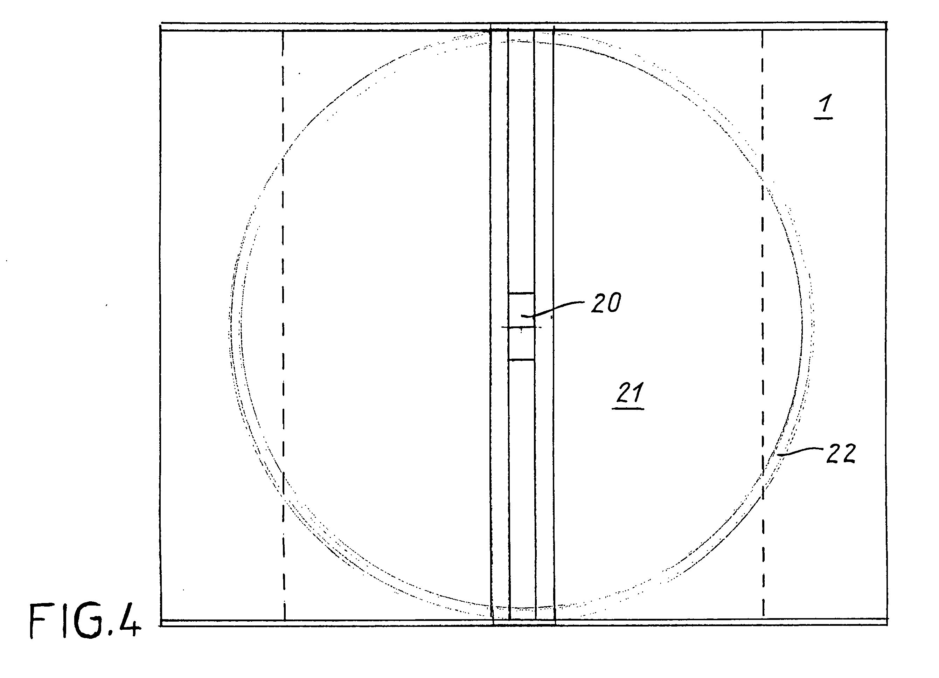

Fig. 4 zeigt die Draufsicht auf eine dritte Ausführungsform der Erfindung, bei der mittig über dem Siebband 1 eine Zylinder-Kolben-Einheit 20 als Druckvorrichtung angeordnet ist und diese eine runde Pressplatte 21 in und mit einem runden Kasten 22 bewegt, wobei, wie oben zu Fig. 1 beschrieben, auch hier die Pressplatte 21 mit einer in Fig. 4 nicht dargestellten Gleitdichtung gegen die Innenwand des Kastens 22 abgedichtet ist. Der Vorteil dieser Ausführungsform ist, dass durch die runde Form die Statik verbessert wird und demzufolge noch höhere Drücke für die Entwässerung erreicht werden können. Die Funktion und der Betriebsablauf sind gleich wie oben zu Fig. 1 beschrieben.

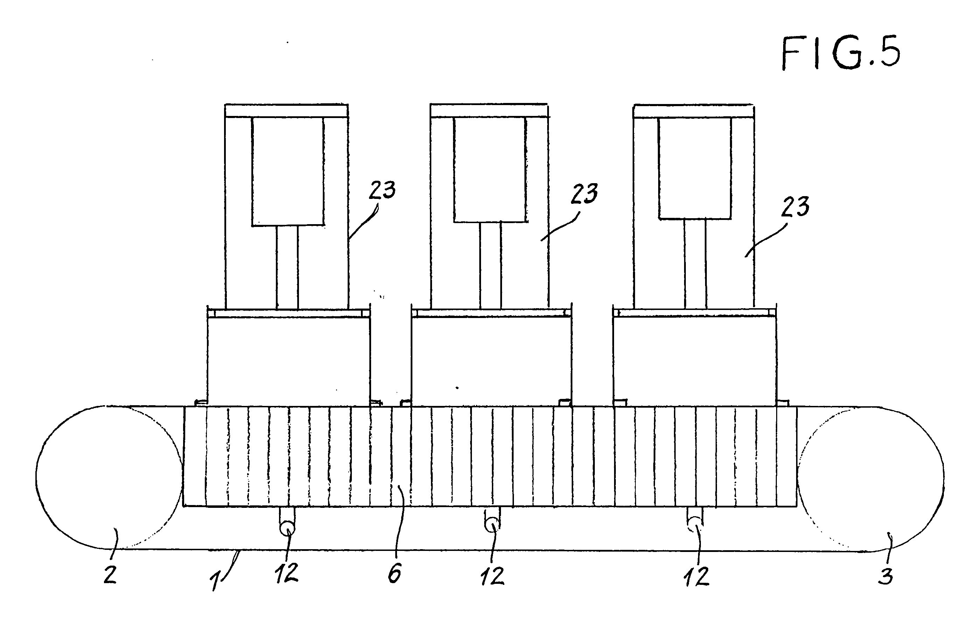

Fig. 5 zeigt teilweise geschnitten die Seitenansicht einer Druckentwässerungsanlage für Schlamm, bei der über dem Siebband 1 mehrere, im dargestellten Beispiel drei, der oben beschriebenen Entwässerungseinheiten 23 hintereinander angeordnet sind. Vorzugsweise kommt dabei die runde Ausführungsform gemäß Fig. 4 mit dem runden Kasten 22 und der runden Pressplatte 21 zum Einsatz.

Da hier die einzelnen Entwässerungseinheiten 23 im Vergleich zu den Vorrichtungen mit nur einer Einheit kleinere Flächen beaufschlagen, können nochmals wesentlich höhere Drücke auf den Schlamm wirken, so dass ein entsprechend höherer Entwässerungsgrad erreicht wird. Die Anzahl der Entwässerungseinheiten 23 kann beliebig erweitert werden. Selbstverständlich kann statt der runden auch eine andere, also rechteckige oder quadratische Form Verwendung finden.

Besonders wenn bei einer Entwässerungsvorrichtung wie nach Fig. 1 oder 3 die Pressplatte 10 von mehreren Druckeinrichtungen - im Beispiel zwei hydraulischen Zylinder-Kolben-Einheiten 9, beaufschlagt und bewegt wird, muss auf einen möglichst exakten Gleichlauf geachtet werden, damit die Pressplatte 10 in waagrechter Position bleibt, also nicht verkantet und auf den Schlamm oder Schlammpresskuchen 16 ein gleichmäßiger Druck ausgeübt wird.

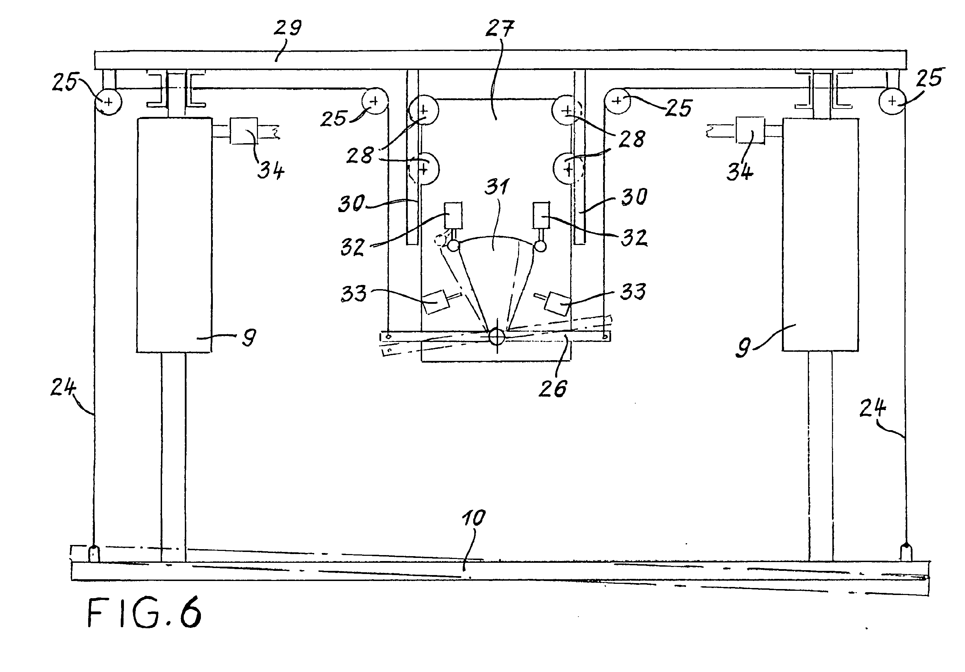

Fig.6 zeigt die Seitenansicht einer solchen geeigneten Gleichlaufregelung. Die Pressplatte 10 wird, wie oben beschrieben, von zwei hydraulischen Zylinder-Kolben-Einheiten 9 beaufschlagt und bewegt. Nahe den entgegensetzten Außenkanten der Pressplatte 10 sind Übertragungselemente 24, hier in Form von zwei Seilen 24 (oder Ketten) befestigt, die über Umlenkrollen 25 zu einem mittig über der Pressplatte 10 angeordneten Waagebalken 26 geführt und an dessen Enden befestigt sind. Der Waagebalken 26 ist in seinem Drehpunkt an einem Wagen 27 befestigt, der mittels Rollen 28 in von einem Gestell 29 herabhängenden Führungsschienen 30 auf und ab bewegbar ist. In der Mitte des Waagebalkens 26, über seinem Drehpunkt ist eine Betätigungsvorrichtung 31, hier in Form einer kreissektorförmigen Platte, für beidseitig am Wagen 27 angeordnete Schalter 32 und Überwachungs- oder Notschalter 33 angebracht. Über die Schalter 32 werden Wegeventile 34 betätigt, die den hydraulischen Druck (bzw. Zufluss) in den Zylinder-Kolben-Einheiten 9 für den Gleichlauf der Kolben steuern.

Wird die Pressplatte 10 von den Zylinder-Kolben-Einheiten 9 auf- und abbewegt und mit Druck beaufschlagt, so bewegt sich gegenläufig auch der Wagen 27 mit dem Waagebalken 26 mit. Wird die Pressplatte 10 gleichmäßig beaufschlagt und bewegt, so befindet sich der Waagebalken 26 in der Balance und keiner der Schalter 32 und Überwachungsschalter 33 wird betätigt. Wird der Gleichlauf der Zylinder-Kolben-Einheiten 9 gestört, so gerät auch der Waagebalken 26 aus dem Gleichgewicht und senkt sich nach der einen oder anderen Seite.

Dabei schlägt die Betätigungsvorrichtung 31 zuerst an einen der Schalter 32 an, wodurch über eines der Wegeventile 34 der hydraulische Druck (Zufluss) in einer der Zylinder-Kolben-Einheiten 9 erhöht oder vermindert wird, bis wieder Gleichlauf erreicht ist. Sollte sich der Gleichlauf auf Grund einer massiveren Störung auf diese Weise nicht wieder herstellen lassen und eine bestimmte Toleranz überschritten werden, verschwenkt sich der Waagebalken 26 weiter und die Betätigungsvorrichtung 31 schlägt schließlich an einen der Überwachungs- oder Notschalter 33 an, so dass die Anlage abgeschaltet und die Störung, z.B. durch einen Alarm oder eine sonstige Anzeige, angezeigt werden kann.

Um einen hohen Entwässerungsgrad bzw. hohen Feststoffgehalt des Schlammpresskuchens zu erreichen, hat es sich als vorteilhaft erwiesen, dem zu entwässernden Schlamm für den Entwässerungsvorgang einen Zusatzstoff oder Zusatzstoffe beizumischen, der oder die für eine Auflockerung des Schlamms und damit eine bessere Entwässerung sorgen. Es werden dafür vorzugsweise Zusatzstoffe gewählt, die eine raue Oberfläche aufweisen und/oder eine größere Härte besitzen, als der Presskuchen nach der Phase der Schwerkraftentwässerung. Es eignen sich dafür z.B. Materialien wie Sägemehl oder Klärschlammgranulat aus einer Klärschlammtrocknungsanlage, wie sie beispielsweise in der DE 197 04 201 A1 beschrieben ist. Das nach der DE 197^04 201 A1 als Nebenprodukt anfallende Granulat kann in jeder Feuchtigkeitsstufe und ohne weitere Bearbeitung, wie z.B. Zerkleinern oder Zermahlen, verwendet werden. Durch die insgesamt große und rauhe Oberfläche solcher Zusatzstoffe und/oder deren besondere Härte werden beim Entwässerungs- und Pressvorgang innerhalb des Presskuchens eine Vielzahl von Hohlräumen oder Rissen gebildet, durch die dem Presskuchen das Wasser schneller und besser entzogen werden kann, die Zusatzstoffe haben also einen Drainageeffekt; die Gesamtentwässerungszeit wird dadurch wesentlich verkürzt und der erreichbare Trocknungsgrad des Presskuchens wesentlich auf über 40% TS erhöht; dies wird noch dadurch unterstützt, dass die troc??kenen Zusatzstoffe dem Schlamm auch selbst Feuchtigkeit entziehen. Bei einer abschließenden Trocknung des Schlammpresskuchens in einer Trocknungsanlage wird die Rest-Feuchtigkeit relativ einfach und schnell an die Trocknungsluft abgegeben, so dass der Trocknungsvorgang, ob durch thermische Trocknung oder mittels Wärmepumpe, verkürzt wird und Energie eingespart werden kann.

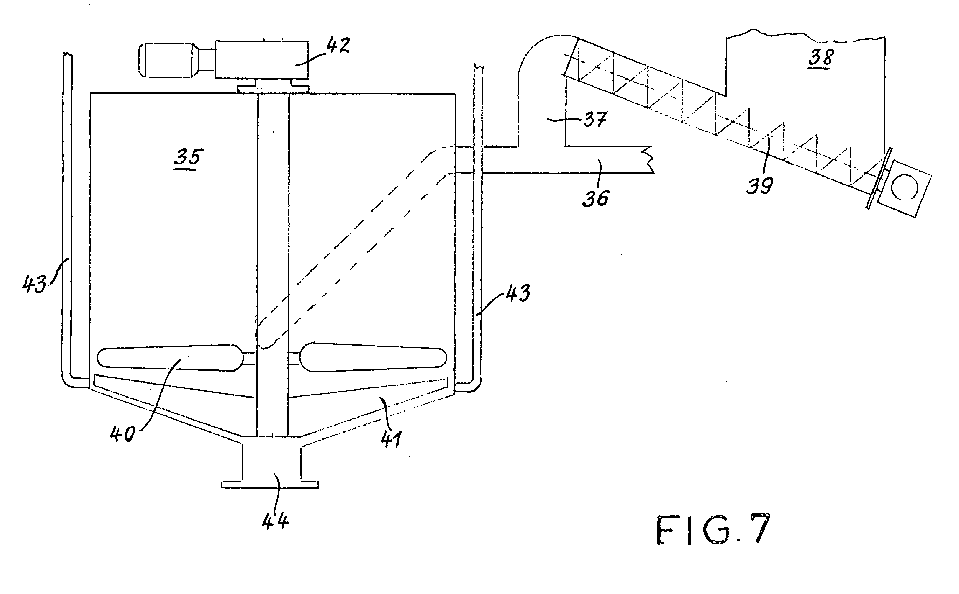

Fig. 7 zeigt schematisch eine Vorrichtung für das Einbringen von Zusatzstoff(en) in den zu entwässernden Schlamm, die erfindungsgemäß zusammen mit einer oben beschriebenen Entwässerungsvorrichtung zum Einsatz kommen kann.

Einer oben beschriebenen Entwässerungsanlage vorgeschaltet ist ein Mischbehälter 35, der über eine Schlammleitung 36 mit Schlamm befüllt werden kann. Die Schlammleitung 36 ist vorzugsweise tangential an der Außenwand des Mischbehälters 35 angeschlossen. An einem Abzweigstutzen 37 der Schlammleitung 36 ist ein Zusatzstoff-Behälter 38 angeschlossen, aus dem mittels einer Fördervorrichtung 39, z.B. eines Schneckenförderers oder eines Förderbandes, der Zusatzstoff im richtigen Verhältnis zugeführt werden kann. Im Mischbehälter 35 wird ein Rührwerk 40 mit Bodenräumer 41 durch einen Getriebemotor 42 angetrieben und durchmischt intensiv den Schlamm mit den Zusatzstoffen. Durch mehrere am Umfang des Mischbehälters 35 gleichmäßig verteilte Füllrohre 43 wird zusätzlich ein an sich bekanntes Flockungsmittel beigegeben und mit dem Gemisch aus Schlamm und Zusatzstoff vermischt. Wenn das Schlamm-Zusatzstoff-Gemisch genügend mit dem Flockungsmittel reagiert hat, wird das ganze Gemisch durch den Ablauf 44 und über Befüllungsleitungen in die Entwässerungsvorrichtung oder Entwässerungspresse geleitet. Der Mischbehälter 35 ist vorzugsweise über dem Kasten 4 mit der darin heb- und senkbaren Pressplatte 10 angebracht, so dass das ausgeflockte Schlamm-Zusatzstoff-Gemisch ohne eine Pumpvorrichtung, allein durch die Schwerkraft in den Kasten 4 über dem Siebband 1 eingebracht werden kann.

Das Beimischen von Zusatzstoffen bedingt eine Volumenvergrößerung beim zu entwässernden Schlamm von lediglich 1 -2%, ermöglicht aber andererseits eine Erhöhung der Trockensubstanz TS um bis über 20% gegenüber Schlamm ohne Zusatzstoffe; die Volumenvergrößerung ist damit vernachlässigbar.

Als ein Zusatzstoff kommt, wie bereits erwähnt, u.a. Sägemehl oder auch gehäkseltes Stroh in Frage; dieses hat den zusätzlichen Vorteil, dass die Aromastoffe des Sägemehls oder des Strohs den zum Teil unangenehmen Geruch des Klärschlamms bindet.

Ein anderer möglicher Zusatzstoff besteht aus am Ende der Entwässerung aus dem Presskuchen 16 gewonnenen, kleinen Presskuchenteilen bzw. Granulat, wobei auf eine besondere Trocknung des Presskuchens bzw. des Granulats verzichtet werden kann. Der Presskuchen 16 hat eine größere Härte als der Schlamm nach der Schwerkraftentwässerung. Die Beimengung des Presskuchengranulats hat den Vorteil, dass dadurch keine Volumenvergrößerung entsteht, da immer nur ein tatsächlich angefallener Schlammanteil zugemischt wird.

Als besonders vorteilhaft hat es sich erwiesen, wenn als Zusatzstoff ein Gemisch aus Presskuchengranulat und einem anderen Stoff, wie Sägemehl oder gehäkseltes Stroh, beigemischt wird; dabei ist der Anteil des Granulats vorteilhaft nicht zu groß, dabei kann das Granulat durchaus noch eine gewisse Restfeuchte aufweisen. Durch ein solches Gemisch als Zusatzstoff werden die Vorteile beider Materialien genutzt, es wird die Drainagewirkung verbessert und Gewicht eingespart und demzufolge auch Energie eingespart.

### Bezugszeichenliste:

- 1: Siebband
- 2,3: Walzen
- 4: Kasten
- 5: Dichtung
- 6: Stützgerüst
- 7: Lochblech, Spaltsieb
- 8: Öffnungen
- 9: Zylinder-Kolben-Einheit, Druckvorrichtung
- 10: Pressplatte
- 11: Gleitdichtung
- 12: Leitung
- 13: Anschläge
- 14: Abstreifer
- 15: Träger
- 16: Presskuchen
- 17: Schiene
- 18: Zerkleinerungswalze
- 19: Abhebervorrichtung
- 20: Druckvorrichtung, Zylinder-Kolben-Einheit
- 21: Pressplatte
- 22: Kasten
- 23: Entwässerungseinheit
- 24: Übertragungselemente (Seil, Kette)
- 25: Umlenkrollen
- 26: Waagebalken
- 27: Wagen
- 28: Rollen
- 29: Gestell
- 30: Führungsschiene
- 31: Betätigungsvorrichtung
- 32: Schalter
- 33: Überwachungsschalter
- 34: Wegeventil
- 35: Mischbehälter
- 36: Schlammleitung
- 37: Abzweigstutzen
- 38: Zusatzstoff-Behälter
- 39: Fördervorrichtung
- 40: Rührwerk
- 41: Bodenräumer
- 42: Getriebemotor
- 43: Füllrohre
- 44: Ablauf

## Patentansprüche

1. Vorrichtung zur Entwässerung von Schlämmen und schlammhaltigen Gemischen, wie Klärschlämme, Industrieschlämme und weitere schlammartige Ausgangsprodukte, bei der der flüssige Anteil des zu entwässernden Schlammes durch ein Siebband gepresst wird und der zurückbleibende Schlammpresskuchen abtransportiert wird,
**dadurch gekennzeichnet,**
**dass** über dem Siebband (1) ein heb- und senkbarer Kasten (4, 22) angeordnet ist, der in seinem abgesenkten Zustand mit einer Dichtung (5) auf dem Siebband (1) aufliegt und mit Schlamm befüllbar ist und dass in dem Kasten (4, 22) eine mit einer Gleitdichtung (11) gegen die Innenwand des Kastens (4, 22) abgedichtete Pressplatte (10, 21) durch mindestens eine Druckvorrichtung (9, 20) auf- und ab bewegbar und mit variablem Druck auf den im Kasten (4) befindlichen Schlamm pressbar ist.

2. Vorrichtung nach Anspruch 1, **dadurch gekennzeichnet, dass** als Druckvorrichtung zur Beaufschlagung der Pressplatte (10, 21) mindestens eine hydraulische Zylinder-Kolben-Einheit (9, 20) vorgesehen ist.

3. Vorrichtung nach Anspruch 1, **dadurch gekennzeichnet, dass**
ein Feuchtigkeitsfühler vorgesehen ist, der bei fehlendem Presswasser ein Signal an die Druckvorrichtung (9, 20) gibt und diese solange den Druck auf die Pressplatte (10, 21) erhöht, bis wieder Presswasser vorhanden ist bzw. der Abschaltdruck erreicht ist.

4. Vorrichtung nach Anspruch 1, **dadurch gekennzeichnet, dass** in dem Kasten (4) Anschläge (13) vorgesehen sind, an denen die Pressplatte (10) bei ihrer Hubbewegung anschlägt und den Kasten (4) in ihrer weiteren Hubbewegung mitnimmt und vom Siebband (1) abhebt.

5. Vorrichtung nach Anspruch 4, **dadurch gekennzeichnet, dass** der Kasten (4) über Hebevorrichtungen, z.B. Zylinder-Kolben-Einheiten, heb- und senkbar ist.

6. Vorrichtung nach Anspruch 1, **dadurch gekennzeichnet, dass** das Siebband (1) als Endlosband um Rollen (2, 3) geführt ist, von denen mindestens eine als Antriebsrolle für die Bewegung des Siebbandes (1) ausgeführt ist.

7. Vorrichtung nach Anspruch 6, **dadurch gekennzeichnet, dass** an der einen Rolle (3), über die das endlose Siebband (1) geführt ist, ein die gesamte Breite des Siebbandes (1) abdeckender Abstreifer (14) vorgesehen ist.

8. Vorrichtung nach Anspruch 6, **dadurch gekennzeichnet, dass** das Siebband (1) zwischen den Rollen (2, 3) durch ein Stützgerüst (6) getragen ist.

9. Vorrichtung nach Anspruch 8, **dadurch gekennzeichnet, dass** sich zwischen dem Stützgerüst (6) und dem Siebband (1) ein Lochblech oder Spaltsieb (7) befindet.

10. Vorrichtung nach Anspruch 1, **dadurch gekennzeichnet, dass** zur Beaufschlagung der Pressplatte (10) zwei synchron arbeitende hydraulische Zylinder-Kolben-Einheiten (9) vorgesehen sind, deren Gleichlauf durch eine Gleichlaufregelung kontrollierbar ist.

11. Vorrichtung nach Anspruch 10, **dadurch gekennzeichnet, dass** an der Pressplatte (10) einander gegenüberliegend die Bewegung der Pressplatte (10) übertragende Übertragungselemente (24) vorgesehen sind, die mit den freien Enden eines Waagebalkens (26) verbunden sind, und dass an dem Waagebalken (26) eine Betätigungsvorrichtung (31) angeordnet ist, durch die beim Ausschlagen des Waagebalkens (26) Schalter (32, 33) betätigbar sind, über die der hydraulische Druck in (Zufluss zu) den Zylinder-Kolben-Einheiten (9) steuerbar ist.

12. Vorrichtung nach Anspruch 11, **dadurch gekennzeichnet, dass** an der Pressplatte (10) sich diagonal gegenüberliegend als Übertragungselemente je ein Seil (24) oder eine Kette befestigt ist, von denen jede über Umlenkrollen (25) geführt und mit dem jeweils anderen freien Ende des Waagebalkens (26) verbunden ist, und dass der Waagebalken (26) in seinem Drehpunkt mit einem Wagen (27) fest verbunden ist, der mittels Rollen (28) in von einem feststehenden Gestell (29) herabhängend angebrachten Führungsschienen (30) gegenläufig zur Pressplatte (10) auf- und ab bewegbar ist.

13. Vorrichtung nach Anspruch 11, **dadurch gekennzeichnet, dass** beim Auslenken des Waagebalkens (26) durch die daran vorgesehene Betätigungsvorrichtung (31) zunächst einer der Schalter (32) betätigbar ist, über den der hydraulische Druck in (Zufluss zu) den Zylinder-Kolben-Einheiten (9) steuerbar ist, und dass bei weiterem Auslenken des Waagebalkens (26) ein Überwachungs- oder Notschalter (33) betätigbar, über den die Anlage abschaltbar und/oder die Störung anzeigbar ist.

14. Vorrichtung nach Anspruch 12, **dadurch gekennzeichnet, dass** die Schalter (32, 33) am Wagen (27) beidseitig der am Waagebalken (26) befestigten Betätigungsvorrichtung (31) angeordnet sind.

15. Vorrichtung nach Anspruch 1, **dadurch gekennzeichnet, dass** der Kasten (22) einen kreisrunden Querschnitt aufweist, die Pressplatte (21) kreisrund ist und eine einzige, zentrale Druckvorrichtung (Zylinder-Kolben-Einheit) (20) zur Beaufschlagung der Pressplatte (21) vorgesehen ist.

16. Vorrichtung nach Anspruch 1, **dadurch gekennzeichnet, dass** seitlich neben und über dem Siebband (1) mindestens eine Schiene (17) angeordnet ist, in der eine die gesamte Breite des Siebbandes (1) abdeckende Zerkleinerungswalze (18) verschiebbar ist.

17. Vorrichtung nach Anspruch 16, **dadurch gekennzeichnet, dass** mit der Zerkleinerungswalze (18) auch eine die gesamte Breite des Siebbandes (1) abdeckende Abhebevorrichtung (19) in der Schiene (17) verschiebbar ist.

18. Vorrichtung nach Anspruch 1, **dadurch gekennzeichnet, dass** dem Kasten (4, 22) ein Mischbehälter (35) mit Rührwerk (40) zur Beimischung eines grob zerkleinerten, drainage-fördernden Zusatzstoffes zum zu entwässernden Schlamm vorgeschaltet ist.

19. Vorrichtung nach Anspruch 18, **dadurch gekennzeichnet, dass** die Schlammleitung (36), über die der zu entwässernde Schlamm in den Mischbehälter (35) einbringbar ist, über einen Abzweigstutzen (37) Verbindung hat mit einem Zusatzstoff-Behälter (38) aus dem der Zusatzstoff beigemischt wird.

20. Vorrichtung nach Anspruch 19, **dadurch gekennzeichnet, dass** zwischen dem Abzweigstutzen (37) und dem Zusatzstoff-Behälter (38) eine Fördervorrichtung (43) angeordnet ist, über die der Zusatzstoff dosiert zuführbar ist.

21. Vorrichtung nach Anspruch 18, **dadurch gekennzeichnet, dass** am Umfang des Mischbehälters (35) gleichmäßig verteilt mehrere Füllrohre (43) angeordnet sind, durch die ein an sich bekanntes Flockungsmittel beimischbar ist.

22. Vorrichtung nach Anspruch 18, **dadurch gekennzeichnet, dass** im Mischbehälter (35) ein Rührwerk (40) mit Bodenräumer (41) vorgesehen ist.

23. Vorrichtung nach Anspruch 18, **dadurch gekennzeichnet, dass** der Zusatzstoff eine rauhe Oberfläche und eine größere Härte aufweist als der zu entwässernde Schlamm nach einer Vorentwässerung durch Schwerkraft.

24. Vorrichtung nach Anspruch 18, **dadurch gekennzeichnet, dass** der Zusatzstoff aus einem Gemisch aus unmittelbar nach der Druckentwässerung des Schlamms aus dem verbliebenen Schlammpresskuchen anfallenden, kleinen Schlammpresskuchenteilen bzw. Granulat und einem Feuchtigkeit aufnehmenden Stoff von hoher Oberfläche und leichtem Gewicht, wie Sägemehl oder gehäkseltem Stroh besteht.

25. Vorrichtung nach Anspruch 1, **dadurch gekennzeichnet, dass** über dem Siebband (1) mehrere Entwässerungseinheiten (23) bestehend aus dem heb- und senkbaren Kasten (4, 22) und der durch eine Druckvorrichtung (9, 20) darin aufund ab bewegbaren Pressplatte (10, 21) hintereinander angeordnet sind.

26. Verfahren zur Entwässerung von Schlämmen und schlammhaltigen Gemischen, wie Klärschlämme, Industrieschlämme und weitere schlammartige Ausgangsprodukte, bei dem der flüssige Anteil des zu entwässernden Schlamms durch ein Siebband gepresst und der zurückbleibende Schlammpresskuchen abtransportiert wird, **dadurch gekennzeichnet, dass** das Schlamm-Wasser-Gemisch vor dem Pressvorgang allein durch Schwerkraft statisch bis über 50% vorentwässert wird.

27. Verfahren nach Anspruch 26, **dadurch gekennzeichnet, dass** der zu entwässernde Schlamm vor der Zugabe von Flockungsmittel mit einem grob zerkleinerten, drainage-fördernden Zusatzstoff vermischt wird.

28. Verfahren nach Anspruch 26, **dadurch gekennzeichnet, dass** der zu entwässernde Schlamm vor der Vorentwässerung mit einem grob zerkleinerten, drainage-fördernden Zusatzstoff vermischt wird.
